# EUROPEAN PATENT APPLICATION

(11) **EP 2 767 707 A1**
(43) Date of publication of application: **20.08.2014**
(21) Application number: 13382048.0
(22) Date of filing: 18.02.2013
(51) Int. Cl.: F03B 17/02

(54) **Power generating device and method based on gravitational energy**

(71) Applicant: Brain Energy, S.L., 08008 Barcelona (ES)
(72) Inventor: Torrents Casanovas, Juan, 08810 Sant Pere de Ribes (ES); Copelli Yañez, Pablo Ricardo, 08025 Barcelona (ES)
(74) Representative: Sugrañes Patentes y Marcas

(57) **Abstract**

The invention relates to a power generating device and a method based on gravitational energy and on Archimedes' principle. The device (100) comprises a container (1) with a fluid (10) therein and a first mobile body (2) provided with a cavity (21) which moves vertically through the inside of the container from its upper end to its lower end and vice versa. The first mobile body (2) is attached through a connecting rod (5) to a flywheel (4) arranged outside the container (1) close to its upper end. In the downstroke, the first mobile body (2) drops due to gravity, causing the rotation of the flywheel (4). In the last section of its drop, the cavity (21) is gradually drained of fluid and at the end filled with air, causing the body (2) to rise to the upper end of the container (1), where said cavity (21) is drained of air and again filled with the fluid inside the container (1). In the rise and drop, the first mobile body contributes to the rotation of the flywheel and the flywheel helps it perform said strokes without the first body stopping. The flywheel is coupled to a shaft to which it transmits the rotation produced by the first mobile body, the rotational energy of the shaft being susceptible to being converted into another type of energy.

## Description

### Technical Field of the Invention

The present invention relates to a power generating device based on gravitational energy and to a power generating method using said device.

The device comprises a container provided with a fluid therein, a support bottom of the container and an upper end opposite the bottom being distinguished; a first mobile body housed inside the container, able to move vertically due to its own weight and in a guided manner towards the bottom of the container from an upper end position to a lower end position, also being able to move in the opposite direction from the lower end position to the upper end position; and guide means for the guided vertical movement of the first mobile body inside the container.

### Background of the Invention

The growing demand for electricity has created the need to develop devices and installations intended for obtaining energy that can be transformed into electric power in a clean and safe manner. Therefore, multiple installations based on converting wind energy generated by air currents and others, based on converting wave energy generated by the motion of the waves into electric power have been developed in recent years.

Although both wind energy and wave energy are renewable energy sources, they depend on atmospheric conditions and require locating the exploitation installations where the wind blows the strongest or where the waves are the highest, which locations normally present complications with regard to the transport and assembly of the installation components.

Another type of devices and installations for generating electric power from gravitational energy are also known. A type of generator device based on accumulating gravitational energy is the one described in United States patent document US 2009/0127864. The generator based on gravitational energy comprises: a first container which contains fluid; an inflatable bag within the fluid in the first container; a weight or several weights attached to said inflatable bag sufficient to force the inflatable bag to the bottom of the first container when it is not inflated; a pneumatic pump connected to the inflatable bag to inflate the bag, allowing it to float toward the top of the fluid of the first container; a mechanical slide to which said inflatable bag is attached to guide the inflatable bag up and down; means for transforming the vertical force into rotary energy; a second container adjacent to the first container; a generator inside the second container powered by the energy forces generated by the movement of the inflatable bag up and down within the fluid in the first container; a generator shaft connecting the inflatable bag assembly to the generator, such shaft being able to rotate by energy provided by linear up and down travel converted to rotary power by means of a ball screw or by a pinion and endless gear rack; a gear box inside the second container; controls for controlling the operation of the pneumatic pump and generator; controls for controlling the electrical output and electrical distribution of the gravity-powered generator; and energy storage in the form of batteries and/or a fast charging and fast release capacitor bank.

Electric power production according to the generator described above is based on inflating the bag located within the first container which contains fluid, which causes the bag to rise within the fluid on the mechanical slide and the ball screw, and results in the rotation of the generator shaft to generate energy. Next the bag is deflated, allowing the weight or the weights attached to the bag to force it to the bottom of the fluid contained in the first container on the mechanical slide and the ball screw, resulting in the rotation of the generator shaft to generate energy. The electricity created by the generator is finally stored or distributed.

Despite the advantages of the device described for exploiting gravitational energy and Archimedes' principle in electric power generation, the presence of the weights necessary for carrying out the down travel slows down the inflation of the bag and entails certain maintenance to verify that the weights do not become detached from the bag and that the bag is not punctured or does not deteriorate over time. It would further be desirable not to have to provide the device with a motion inverter to transmit rotation to the generator shaft always in the same direction of rotation regardless of if the rotation was generated in the up or down travel of the bag together with the weights.

### Disclosure of the Invention

To provide a solution to the problems considered, a power generating device based on gravitational energy is disclosed, comprising:
- a container provided with a fluid therein, a support bottom of the container and an upper end opposite the bottom being distinguished,
- a first mobile body housed inside the container, able to move vertically in a guided manner from an upper end position to a lower end position due to its own weight and towards the bottom of the container, and from a lower end position to an upper end position in the direction opposite the bottom of the container, a downstroke and an upstroke taking place alternatively, and
- guide means for the guided vertical movement of the first mobile body inside the container.

Essentially, the generating device is **characterized in that** it also comprises a flywheel arranged outside the container and above its upper end, oriented according to a plane perpendicular to the bottom of the container and coupled to the first mobile body through transmission means converting the vertical motion of the first mobile body into a rotary motion of the flywheel about its axial shaft, and converting the rotary motion of the flywheel into a vertical motion of the first mobile body, a primary rotating shaft being coupled to the flywheel and integrally rotating with the same. Furthermore, the first mobile body is provided with a cavity able to be occupied by the fluid arranged inside the container and drained of same by the action of filling means and of displacement means of the fluid provided in the device, and able to be occupied by air or gas by the action of air or gas supply means and drained by the action of air or gas exhaust means provided in the device. All this is configured such that since the cavity is occupied by the fluid of the container, the first body drops due to its own weight towards the bottom of the container, causing the rotation of the flywheel and of the primary shaft, and when the fluid is displaced from the cavity and replaced with air or gas, the first body rises in the direction opposite the bottom of the container due to the force of the weight of the volume of fluid that it displaces contributing to the rotation of the primary shaft in the same direction as during the drop of the first body, the generated rotational energy of the primary shaft being susceptible to exploitation.

Continuous rotation of the primary shaft is thereby achieved due to the upstroke and downstroke cycles of the first mobile body within the container. The primary shaft will be connected to a series of mechanisms known for adapting its rotation to the needs, for example, of an electromagnetic generator, to that end being able to couple, for example, a centrifugal clutch, a revolution multiplier and a centrifugal regulator to the primary shaft.

As the flywheel accumulates kinetic energy in rotational form, said flywheel is used for controlling the vertical and longitudinal motion of the first mobile body, braking its drop and contributing to the start of its rise and drop, preventing the first mobile body from stopping due to the change in direction in its strokes and therefore preventing the primary shaft from no longer rotating.

According to a feature of the invention, the transmission means converting the vertical dropping and rising motion of the first mobile body into a rotary motion of the flywheel about its axial shaft, and vice versa (converting the rotary motion of the flywheel into a vertical rising and dropping motion), comprise a connecting rod with a first end coupled to the upper portion of the first body and with a second end attached in an articulated manner to an appendage that the flywheel is provided with along a portion of its perimeter, the flywheel and the connecting rod forming a connecting rod-crank mechanism.

Said connecting rod-crank mechanism prevents having to use a motion inverter to transmit the rotation to primary shaft in the upstroke and/or downstroke. It is important to stress that as a result of the flywheel and the connecting rod-crank mechanism that it forms, at no time does the primary shaft stop during the up and down cycle, so the generation of energy is continuous.

According to another feature of the invention, the first mobile body is a tubular body open towards the bottom of the container and comprises a frame provided with a side enclosure wall and with an upper cover arranged at the upper end of the frame, the cavity corresponding to the inner space open in the lower portion comprised between the side enclosure and the upper cover. Therefore, the cavity of the first mobile body is communicated from below with the fluid inside the container in which the first mobile body is immersed. Therefore, the first mobile body can have the shape of an inverted cup, bell, cylindrical frame provided in the upper portion with a cover but open at its lower end, etc. The cavity allows being filled with air or with gas for the purpose of increasing the value of the thrust due to Archimedes' principle while at the same time it enables being occupied by the fluid of the container to further increase the weight which the first mobile body itself already has, which prevents having to add weights to increase its mass and to get it to perform the downstroke.

To a certain extent, the upper cover of the first mobile body thus configured works like a valve, which improves motion within the fluid of the container and prevents changes in shape during the upstroke and downstroke, unlike other devices in which inflatable bags are used.

According to another feature of the invention, the upper cover of the first body is vertically movable with respect to the upper end of the frame, the upper cover being able to adopt an open operating position in which there is a gap between the upper cover and the upper end of the frame and between the contour of the upper cover and the side enclosure wall, said gap forming an upper communication opening for communicating the cavity with the outside of the first body and with the fluid surrounding it in the container; and the upper cover also being able to adopt a closed operating position, in which the upper cover is arranged at the upper end of the frame keeping the cavity of the first body sealed in the upper portion.

Preferably, the upper cover of the first body is located below the upper end of the frame of the first body in the open operating position. Therefore, according to a preferred embodiment of the device object of the invention, the upper cover of the first mobile body has a diameter that is less than the inner diameter of the frame of the first body, such that as the cover sinks inside the frame, not only there is a vertical gap between the upper end of the frame (virtually coinciding with the upper end of the side enclosure wall) and the upper cover, but there is also a gap between the contour of the upper cover and the side enclosure wall. These gaps are an upper communication pathway for communicating the cavity of the first mobile body with the inside of the deposit in which the first mobile body is immersed, and therefore said communication pathway can also be used to both provide an outlet for the fluid or the air or gas that may be occupying the cavity at a given time towards the outside of the cavity and to provide an inlet for the fluid when the cavity is empty.

According to the preferred embodiment of the invention, the upper cover is slidably coupled to the upper end of the frame by means of at least one vertical fitting rod arranged perpendicular to the upper cover and provided with a free upper end and with a lower end attached to the upper cover, each fitting rod being able to slide with respect to the upper end of the frame when pushed vertically at one of its ends and to adopt at least two stable fit positions in the frame corresponding to the closed and open operating positions of the upper cover.

According to said preferred embodiment of the invention, the upper end of each fitting rod projects vertically from the upper end of the frame in the closed operating position of the upper cover. For this reason, if the upper end of an adjustment rod receives a certain thrust or pressure, said rod will slide downwards, being introduced in the frame, and since the lower end of the fitting rod is attached to the upper cover of the first mobile body, the cover will also move downwards, going into the open operating position.

According to another feature of the invention, the displacement means for displacing the fluid from the cavity of the first mobile body comprise a second body housed inside the container and fixedly arranged at the bottom of same, configured such that the outer volume of the second body is complementary to the volume of the cavity of the first body, the second body being arranged vertically aligned with the first body such that during a first downstroke section of the first body, the upper cover is in the open operating position and the cavity is occupied by the fluid inside the container, and in a last downstroke section the fluid is gradually displaced from the cavity by the gradual introduction of the second body in the cavity until reaching a lower end position in which the upper cover is in the closed operating position and in which the entire cavity is occupied by said second body.

The second body thus acts like a plunger displacing the fluid from within the cavity of the first mobile body when said body drops vertically onto it. In fact, to assure the vertical alignment of the first body and of the second body, preferably each of the bodies is provided with a through hole in the vertical direction for the passage therethrough of the guide means, which in turn and preferably are formed by a bar arranged inside the container in the direction perpendicular to the bottom of the container.

According to another feature of the invention, the second body is a tubular body containing air or gas therein, comprising a frame provided with a side enclosure wall and finished in the lower portion with a base arranged such that it is supported on the bottom of the container and finished in the upper portion with a cover that can move vertically upwards, said cover being able to adopt an open operating position in which a gap is created between the cover and the upper end of the frame through which the air or gas from inside the second body is released upwards, and a closed operating position in which the cover is arranged at the upper end of the frame keeping the upward air or gas passage closed, the cover forming the air or gas supply means for supplying air or gas to the cavity of the first body when the cover is in the open operating position.

According to another feature of the invention, in the last downstroke section of the first body, the upper cover of the first body is gradually moved upwards, going from its open operating position to its closed operating position by the contact of said upper cover with the cover of the second body and the thrust received from the latter cover as the first body drops to the lower end position.

According to another feature of the invention, the cover of the second body adopts the open operating position once the first body has reached the lower end position and maintains it at least until the cavity of the first body is occupied by air or gas.

According to another feature of the invention, the upper end of the frame of the second body is provided with at least raising and lowering means comprising a cylinder, a plunger and a rod able to extend beyond the cylinder or to be retracted therein, in which the cylinder is fixedly arranged inside the frame with the rod oriented perpendicular to the cover and its end attached to said cover, such that the extension and the retraction of the rod make the cover go from the closed operating position to the open operating position and from the open operating position to the closed operating position, respectively.

According to another feature of the invention, the device comprises at the upper end of the container opening actuating means for opening the upper cover of the first body which act on the upper cover when the first body has reached the upper end position at the end of its upstroke, said opening actuating means causing the movement of the upper cover for it to go from the closed operating position to the open operating position, the release of the air or gas contained in the cavity and the filling of the cavity with the fluid in which the first body is immersed taking place with the opening, such that the opening actuating means act at the same time as air or gas exhaust means and as filling means for filling the cavity with fluid.

According to another feature of the invention, the opening actuating means of the upper cover of the first body comprise at least one actuating cylinder the rod of which is arranged such that it is aligned with a corresponding fitting rod of the upper cover and the extension of which causes the thrust with the downward movement of the upper end of the corresponding fitting rod which initially projects vertically from the upper end of the frame of the first body once the first body has reached the upper end position at the end of its upstroke.

The generating device object of the invention can be installed virtually anywhere since it is not limited to difficult locations where the wind blows or where there are intense waves, being able to be installed close to points where electricity is demanded, thereby reducing the associated costs. The proposed device can even be installed underground or in the water, minimizing the environmental impact.

It can be designed in different sizes for adapting to a specific application depending on the power demanded either for generating energy on an industrial scale or for a grid connection application.

The startup of the generating device is simple and can reach an output close to 100% in a cycle (one downstroke and another upstroke) and in a very short time, i.e., approximately one minute.

According to another aspect of the invention, a power generating method is disclosed which is essentially **characterized in that** it comprises having a power generating device such as the one described above according to the embodiment comprising a first mobile body and a second body, and in which both bodies are provided with movable upper covers capable of adopting an open operating position and a closed operating position, and performing the following steps to start and maintain the rotation of the primary shaft integral with the rotation of the flywheel:
a) starting a first downstroke of the first mobile body with its upper cover in the open operating position, allowing it to fall due to its own weight and with the cavity filled with the fluid that the container is filled with, thereby causing the start of the rotation of the flywheel and the start of the rotation of the primary shaft,
b) the upper cover adopting the closed operating position when the first body has reached the lower end position at the end of the downstroke, in which the cavity of the first body is completely occupied by the second body and lacking fluid,
c) waiting until the actual rotation of the flywheel pulls the first body upwards thereby starting an upstroke,
d) supplying air or gas to the cavity until filling the entire volume of the cavity with it, thereby causing the continuation of the rise of the first body due to the thrust of the force equal to the weight of the volume that the first body displaces in the fluid of the container with its cavity filled with air or gas, and thereby the continuation of the rotation of the flywheel and of the primary shaft,
e) when the first body reaches the upper end position in its upstroke, the upper cover going from the closed operating position to the open operating position, whereby the cavity is drained of air or gas and subsequently filled again with the fluid,
f) again starting a successive downstroke of the first body aided at first by the rotation of the flywheel and subsequently by the weight of the first body and of its cavity filled with fluid which contributes to the continuation of the rotation of the flywheel and to the continuation of the rotation of the primary shaft, and
g) repeating steps b) to f) up to the time desired for keeping the primary shaft rotating.

### Brief Description of the Drawings

The attached drawings show by way of non-limiting example a preferred embodiment of the power generating device object of the invention, depicting it carrying out various steps of the power generating method based on using the same. In said drawings:
Fig. 1 is a front perspective view of a preferred embodiment of the power generating device object of the invention;
Fig. 2 is a rear perspective view of the device of Fig. 1;
Fig. 3 is a front view of the device of Fig. 1;
Fig. 4 is a side view of the device of Fig. 1;
Figs. 5 to 10 are perspective views of the device of Fig. 1 depicted in various operating steps, particularly from the start of the downstroke of the first mobile body at the upper end position, passing through the lower end position, until completing the upstroke again reaching the upper end position.
Fig. 11 is a perspective view of the first mobile body;
Fig. 12 is a section view according to a vertical section of the first mobile body of Fig. 11;
Figs. 13 and 14 are partial perspective views of the frame of the first mobile body of Fig. 11, with its upper cover in the closed operating position and in the open operating position, respectively;
Fig. 15 is a bottom perspective view of the second body;
Fig. 16 is a top perspective view of the second body of Fig. 15 but with its cover in the open operating position;
Figs. 17 and 18 are section views according to a vertical section of the second body of Fig. 15, with its cover in the closed and open operating positions, respectively;
Fig. 19 is a view of the first body and of the second body in the start of the upstroke in which the cover of the first body is in the closed operating position and the cover of the second body is in the open operating position, moments after the first body has reached the lower end position; and
Fig. 20 is a partial detail view of the upper portion of the first mobile body with its upper cover in the open operating position due to the action of the opening actuating means.

### Detailed Description of the Drawings

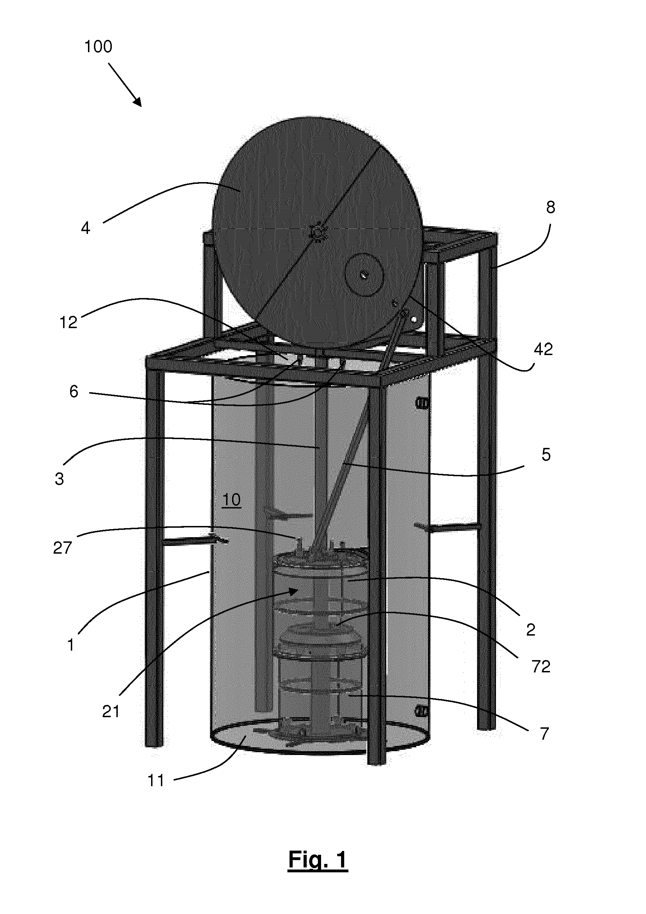

Figs. 1 to 4 show a power generating device 100 consisting of the following components:
- a container 1 provided with a fluid 10 therein, particularly water in the depicted drawings. The container 1 is provided with a bottom 11 intended for being supported on the ground or terrain where the device is installed and for keeping the cylindrical container 1 upright, and an upper end 12 opposite the bottom 11 and open in the upper portion;
- a flywheel 4 arranged outside the container 1 and above its upper end 12, oriented according to a plane perpendicular to the bottom 11 of the container 1;
- a first mobile body 2 housed inside the container 1, which moves vertically downwards (downstroke) and upwards (upstroke) from an upper end position to a lower end position, and vice versa, in a guided manner along guide means 3 formed by a bar arranged inside the container 1 in the direction perpendicular to the bottom 11 and going from said bottom 11 to the upper end 12. Concerning the length of the stroke (downstroke or upstroke), it would be somewhat less than the height of the container 1. For example, for a container 1 with a height of 4 m, the length of the stroke would be approximately of 3.2 m;

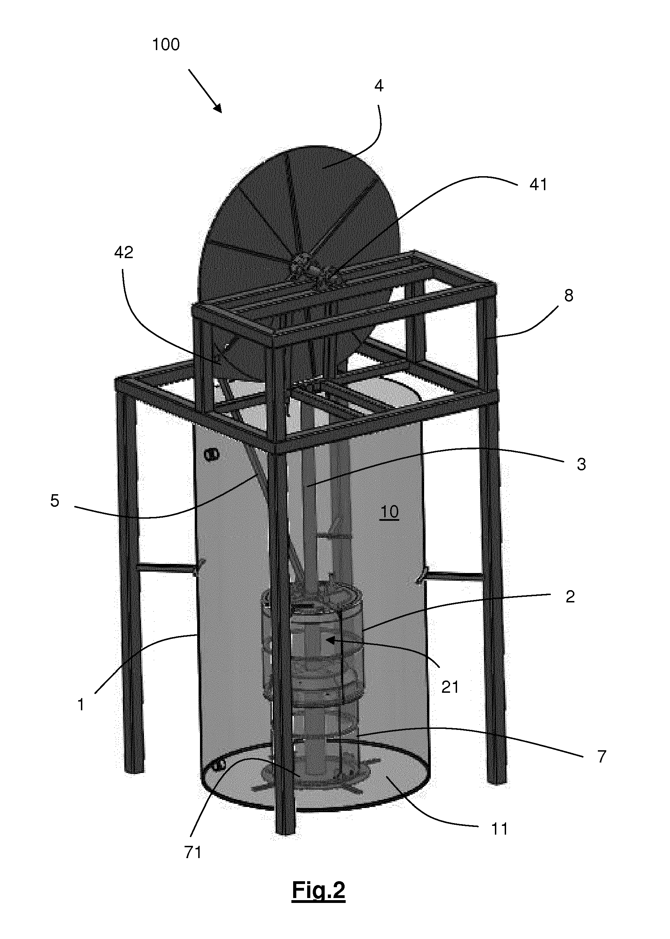

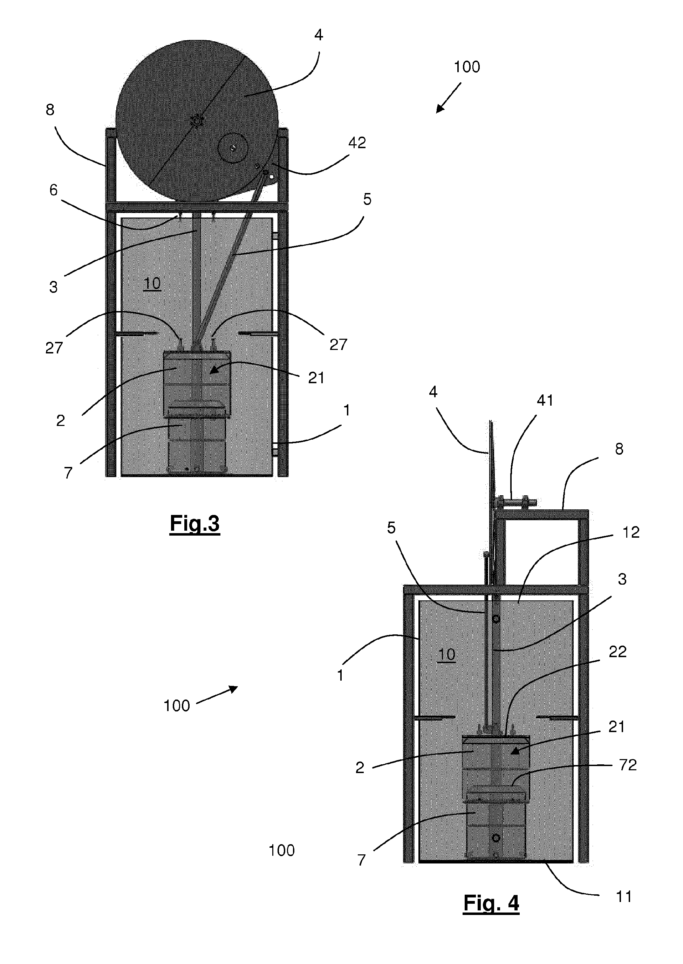

- transmission means converting the alternating vertical motion of the first mobile body 2 into a rotary motion of the flywheel 4 about its axial shaft and vice versa, i.e., converting the rotary motion of the flywheel 4 into the alternating linear motion of the first body 2, formed by a connecting rod 5 with a first end coupled to the upper portion of the first body 2 and with a second end attached in an articulated manner to an appendage 42 that the flywheel 4 is provided with along a portion of its perimeter, the flywheel 4 and the connecting rod 5 forming a connecting rod-crank mechanism in which the first mobile body 2 would act as a plunger. As can be seen in particular in Figs. 2 and 4, a primary shaft 41 which rotates integrally with the flywheel 4 is coupled such that it is aligned with the axial shaft of the flywheel 4. The primary shaft 41 receives the energy generated in the device 100 in the form of rotational kinetic energy, being able to be connected to a series of mechanisms (not depicted) such as a centrifugal clutch, a revolution multiplier and a centrifugal regulator, to adapt its rotation to the needs of an electromagnetic generator (not depicted) to generate electricity;
- a second body 7 housed inside the container 1, specifically fixedly coupled to the bottom 11 of same, vertically aligned with the first mobile body 2; and
- a support frame 8 formed by a series of metal bars arranged to laterally assure that the container 1 is maintained upright, supported on its bottom 11, also by another series of bars for the correct arrangement of the flywheel 4, of the primary shaft 41 through corresponding bearings, and of other mechanisms, such as opening means 6, for example, which will be discussed below.

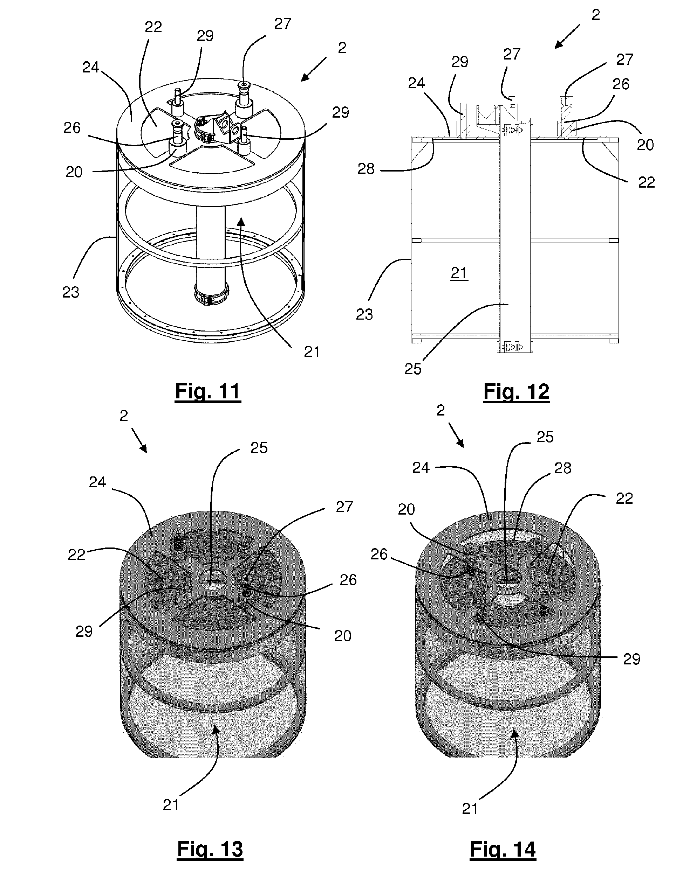

The first mobile body 2 is a body having a considerable mass, so it is heavy (as a guideline, its mass can be comprised between 200 and 300 kg for a container height comprised between 3 and 6 m). It is configured as a tubular body lacking a lower base, so it is open towards the bottom 11 of the container 1. The first mobile body 2 comprises a frame provided with a side enclosure wall 23 and with an upper cover 22 arranged at the upper end 24 of the frame (see Figs. 11 to 14). Therefore, the first mobile body 2 has a cavity 21 configured by the inner space open in the lower portion (similar to the inner configuration of an inverted cup or of a bell) comprised between the side enclosure 23 and the upper cover 22, i.e., the hollow or inner space of the tubular body formed in the first mobile body 2. Therefore, since the cavity 21 is open in the lower portion, said cavity 21 can be communicated with the fluid 10 contained in the container 1.

The cavity 21 can be occupied by the fluid 10 arranged inside the container 1 and drained of same by the action of filling means and of displacement means of the fluid provided in the device 100, respectively. Furthermore, the cavity 21 also can be drained of the fluid 10 and instead be filled with air or with gas by the action of air or gas supply means, and also be drained by the action of air or gas exhaust means provided in the device 100. All the means mentioned above will be further explained below.

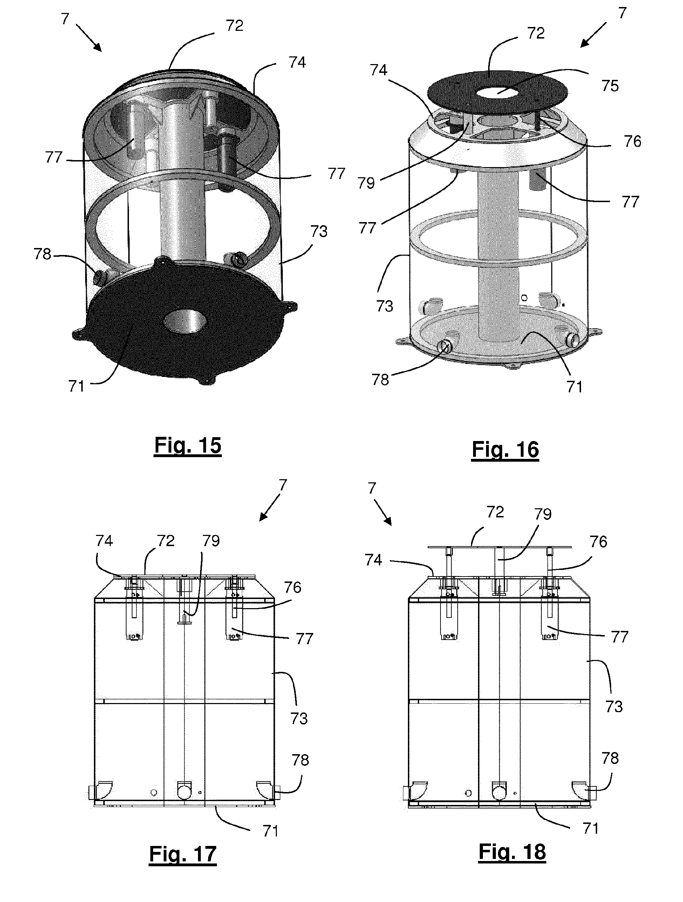

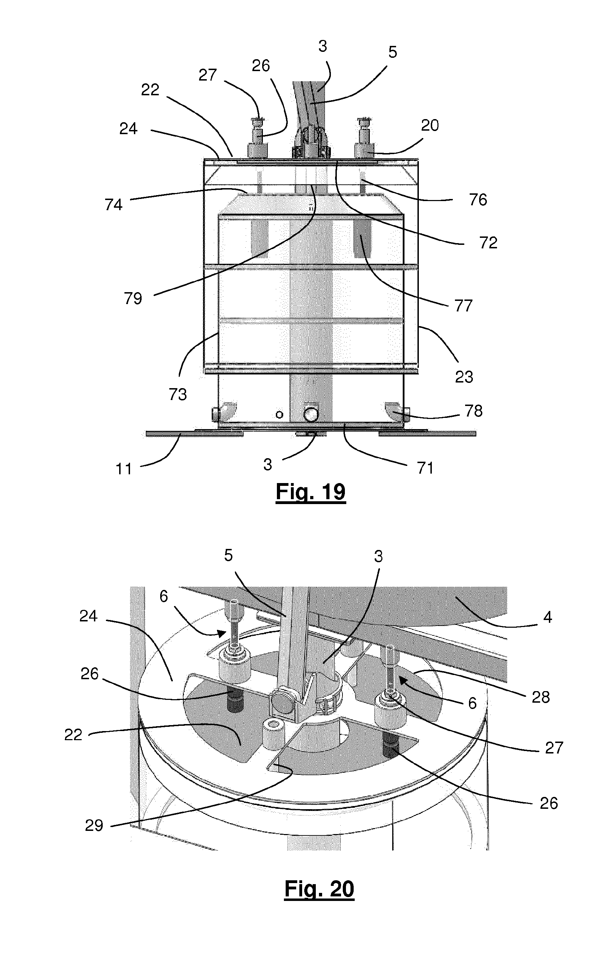

As can be seen in Figs. 12 to 14, the first mobile body 2 is provided with a through hole 25 going through it from top to bottom, said hole being traversed by the bar of the guide means 3 along which it slides in a guided manner. Concerning construction, said through hole 25 is demarcated by a tube (see Figs. 11 and 12) which internally houses the bar of the guide means 3. Similarly, the second body 7 is also provided with a through hole 75 (see Figs. 15 to 18) demarcated by a tube for housing the lower portion of the bar of the guide means 3 (see Fig. 19) and thereby getting the first mobile body 2 and the second body 7 to be vertically aligned.

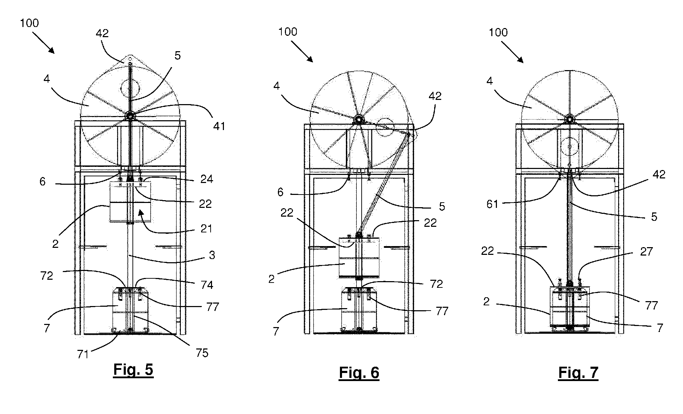

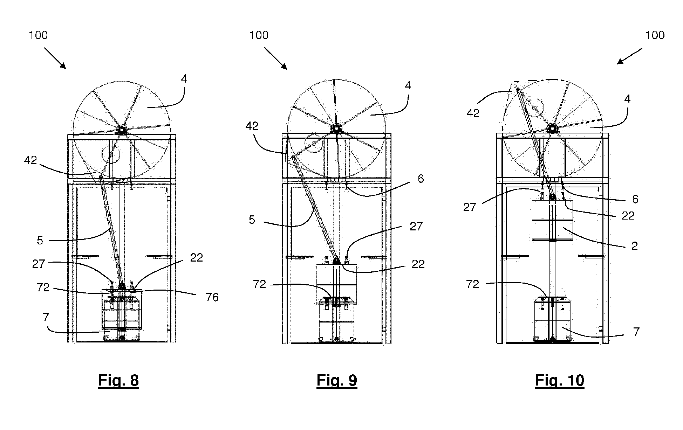

The first mobile body 2 was designed so that when the cavity 21 is completely occupied by the fluid 10, the weight of the first mobile body 2, immersed in the container 1, makes it sink and move towards the bottom 11. In contrast, when the fluid 10 is displaced from the cavity 21 and replaced with air or with gas, the outer volume of the first body 2, including the volume of the cavity 21 filled with air or gas, is such that the weight of the volume of fluid 11 that it displaces within the container 1 is greater than the weight of the first body 2 per se and as a result, due to Archimedes' principle, it experiences an upward vertical thrust (see Figs. 9 and 10) towards the upper end 12 of the container 1, performing the upstroke. In summary, the first mobile body 2 performs successive downstroke (see Figs. 5 to 7) and upstroke (see Figs. 7 to 10) cycles, i.e., upstroke and downstroke based on the gravitational action of the weight of the second body 2 and on the upward vertical thrust due to Archimedes' principle, according to the conditions of the cavity 21.

In turn, the second body 7 is configured such that its outer volume is complementary to the volume of the cavity 21 of the first mobile body 2, i.e., the cavity 21 can be completely occupied by the second body 7, as can be seen in Fig. 7. In the last downstroke section of the first mobile body 2 towards the bottom 11 of the container 1 (see Figs. 1 and 7), as the first body 2 drops, its cavity 21 is gradually occupied by the second body 7 until reaching a lower end position in which the entire cavity 21 is occupied by said second body 7 (see Fig. 7). As the second body 7 enters the cavity 21, since the first body 2 sinks due to gravity and falls on the second body 7, the fluid 10 that the cavity 21 initially occupied in the downstroke is completely displaced from said cavity. In fact, the second body 7 is the main component of the displacement means for displacing the fluid 10 from the cavity 21.

The upper cover 22 of the first mobile body 2 and the upper cover 72 of the second body 7 are responsible for the cavity 21 of the first mobile body 2 being able to be occupied by the fluid 11 and by the air or gas, respectively.

As observed by comparing Figs. 13 and 14, the upper cover 22 of the first body 2 is vertically movable with respect to the upper end 24 of the frame of the first body 2, the upper cover 22 therefore being able to adopt a closed operating position and an open operating position, respectively. In Fig. 14, pertaining to the open operating position of the upper cover 22, it can be seen that there is a gap between the upper cover 22 and the upper end 24 of the frame and also between the contour 28 of the upper cover 22 and the side enclosure wall 23. Said gap is an upper communication opening for communicating the cavity 21 with the outside of the first body 2 and therefore with the fluid 10 surrounding it in the container 1. In fact, it is observed in Figs. 14 and 20 that in the open operating position the upper cover 22 is located below the upper end 24 of the frame of the first body 2 and that the diameter of the upper cover 22 is less than the inner diameter of the frame, precisely so that when the upper cover 22 moves downwards towards the inside of the frame, the mentioned gap remains between the contour 28 of the upper cover 22 and the side enclosure wall 23.

In contrast, in the closed operating position, depicted in Figs. 11 to 13), the upper cover 22 is arranged at the upper end 24 of the frame of the first body 2 keeping the cavity 21 sealed in the upper portion.

In more detail, the upper cover 22 is slidably coupled to the upper end 24 of the frame of the first body 2 by means of two vertical fitting rods 26 arranged perpendicular to the upper cover 22, as shown in Figs. 11 to 14, 19 and 20. Each fitting rod 26 is provided with a free upper end 27 and with a lower end attached to the upper cover 22 and has the capability to slide with respect to the upper end 24 of the frame when pushed vertically at one of its ends and to adopt at least two stable fit positions in the frame corresponding to the closed and open operating positions of the upper cover 22. Another feature to be highlighted is that precisely in the closed operating position, the upper end 27 of each fitting rod 26 projects vertically above the upper end 24 of the frame, as seen for example in Fig. 13, whereas when the upper cover 22 is open, the upper ends 27 are virtually sunk inside fitting sleeves 20 that are part of the diagonals of the upper portion of the frame.

To facilitate the adoption of the two stable positions corresponding to the closed and open positions of the upper cover 22, each fitting rod 26 is provided with two perimetral grooves 9 by way of a channel or notches, one below the head of the upper end 27 and the other one above the lower end. Both perimetral grooves 9 can be seen in Fig. 12 since the section of the fitting rods 26 is shown; only the upper groove 9 is seen in Figs. 11 and 19 since the upper cover 22 is closed and the lower groove 9 is concealed within the fitting sleeve 20; and only the lower groove 9 can be seen in Fig. 20 since the cover 22 is open and the upper groove 9 is concealed within the fitting sleeve 20.

In turn, the fitting sleeves 20 comprise therein a perimetral projection fitting precisely in the grooves 9. The fitting rods 26 are preferably made of a flexible material, which favors their compression when the fitting rods 26 are pushed at one of their ends to pass through the projections of the fitting sleeves 20 until reaching the section in which the perimetral groove 9 reaches the height of the projection, decompressing and thereby adopting a stable position. Therefore, in the closed operating position (see for example Figs. 12 and 13), the perimetral groove 9 fitted in the projection of the fitting sleeve 20 is the lower groove. Since the lower end of the fitting rods 26 is attached to the upper cover 22, if pressure is exerted or the rods are pushed downwards by their upper ends 27, the upper cover 22 will sink in the frame and the fitting rods 26 will slide until it is the upper perimetral groove 9 that is fitted in the projection, adopting the open operating position (see Fig. 14). This, for example, is what occurred in Fig. 20, which corresponds to the subsequent moment when the first mobile body 2 has reached the upper end position in which the upper cover 22 was initially closed. Opening actuating means 6 for opening the upper cover 22, comprise at least one actuating cylinder the rod of which is arranged such that it is aligned with a corresponding fitting rod 26. The extension of the rod of the actuating cylinder causes the thrust with the downward movement of the upper end 27 of the corresponding fitting rod 26 which initially projects vertically from the upper end 24 of the frame of the first body 2 once the first body 2 has reached the upper end position at the end of its upstroke.

In contrast, to go from the open operating position to the closed operating position, it will be the lower ends of the fitting rods 26 the ones to be pushed upwards, and this can be done by exerting certain upward pressure or thrust on the lower face of the upper cover 22 as will be explained below in relation to Fig. 19.

Finally, it can also be seen that the first mobile body 2 also comprises two guides 29 also coupled to respective fitting sleeves 20. The function of the guides 29 consists in assuring that the upper cover 22 fits perfectly when it is opened and closed, limiting a possible unwanted rotational motion during the movement of the upper cover 22.

Like the first mobile body 2, the second body 7 is also provided with a movable cover 72, except that in the second body 7 it can move vertically upwards. As can be seen in Figs. 15 to 18, the second body 7 is a tubular body containing air or gas therein and comprising a frame provided with a side enclosure wall 73 finished in the lower portion with a base 71 arranged such that it is supported on the bottom 11 of the container 1 and finished in the upper portion with a cover 72 that can move vertically upwards. The air or gas contained inside the second body 7 is injected therein by means of an external compressor system (not depicted in the drawings) through the conduits 78 provided in the lower portion of the second body 7.

The cover 72 can adopt an open operating position (see Figs. 16, 18 and 19) in which a gap is created between the cover 72 and the upper end 74 of the frame through which the air or gas from inside it is released upwards, and a closed operating position (see Figs. 15 and 17) in which the cover 72 is arranged at the upper end 74 of the frame keeping the upward air or gas passage closed. The cover 72 itself therefore forms the air or gas supply means for supplying air or gas to the cavity 21 of the first body 2 when the cover 72 is in the open operating position, as in the case of the situation depicted in Fig. 19.

In the last downstroke section of the first body 2, depicted in Fig. 7, the upper cover 22 of the first body 2 is gradually moved upwards, going from its open operating position to its closed operating position by the contact of said upper cover 22 with the cover 72 of the second body 7 which is dropping. As the first body 2 drops onto the second body 7, the upper cover 22 abuts with the closed cover 72 and the thrust that the upper cover 22 receives from the cover 72 pushes the lower ends of the fitting rods 26 upwards, and the upper cover 22 is therefore closed, the cavity 21 being completely occupied by the second body 7 and sealed in the upper portion by the upper cover 22. These seal and occupation conditions of the cavity 21 by the second body 7 define by the lower end position of the first body 2.

Then, with the aid of the inertia provided by the flywheel 4, which prevents the motion of the first mobile body 2 from stopping, and by its attachment to the connecting rod 5, the first mobile body 2 starts to rise. Said rise creates a certain suction or negative pressure between the upper cover 22 and the cover 72, which is used to synchronize the actuation of raising and lowering means provided between the cover 72 and the upper portion of the frame of the second body 7, and to make the cover 72 go to an open operating position (see Fig. 19).

As can be seen in Figs. 15 to 18, the upper end 74 of the frame is provided with two raising and lowering means which in turn comprise a cylinder 77, a plunger and a rod 76 susceptible to extending beyond the cylinder 77 or to being retracted therein. Each cylinder 77 is fixedly arranged inside the frame with the rod 76 oriented perpendicular to the cover 72 and its end is attached to said cover 72, such that the extension and the retraction of the rod 76 make the cover 72 go from the closed operating position (Fig. 17) to the open operating position (Fig. 18) and from the open operating position to the closed operating position, respectively.

In Fig. 19 it can be seen that in the open operating position, the cover 72 is right below the upper cover 22. Since the cover 72 is open, the air or gas contained inside the second body 7 is then released and occupies the cavity 21 of the first mobile body 2, which continues rising moving a little further away from the second body 7 in an aided manner since it is driven upwards by the connecting rod 5. The cover 72 of the second body 7 remains in the open operating position at least until the cavity 21 of the first body 2 is occupied by enough air or gas so that the first body 2 itself together with its cavity 21 filled with air or gas rises by itself due to the weight of the volume of fluid 10 that it displaces within the container 1. In other words, right at the start of the upstroke, the first body 2 rises due to the flywheel 4 and its coupling to the connecting rod 5, however there reaches a point where the amount of air or gas occupying the cavity 21 is enough so that the first mobile body 2 rises by itself due to Archimedes' principle and it is after this point where it is the first body 2 itself that transmits rotational energy to the flywheel 4, and not the other way around, and is therefore, the element responsible for generating energy by the rotation of the primary shaft 41. Once the cavity 21 is completely filled, the rods 76 are retracted and the cover 72 of the second body 7 is closed until the start of the next upstroke of the following cycle.

The operation of the device 100 and specifically a cycle made up of a downstroke and of an upstroke of the first mobile body 2 is depicted in Figs. 5 to 10.

Initially, the device 100 starts working when the first mobile body 2 is located at the upper end position (see Fig. 5) but with its cavity 21 already filled with the fluid 10, since the upper cover 22 is in the open operating position. It is observed that the upper cover 22 is below the upper end 24 of the frame and that the upper ends 27 of the fitting rods 26 are sunk inside the fitting sleeves 20.

In these conditions, the first mobile body 2 drops due to the effect of gravity on same. As the first mobile body 2 moves downwards along the bar of the guide means 3, a rotational motion of the flywheel 4 is generated (since it is connected to the first body 2 by means of the connecting rod 5), which causes the rotation of the primary shaft 41 (see Fig. 6 for example). The primary shaft 41 is responsible for transmitting specific revolutions and torque to the transmission responsible for moving a permanent magnet generator or an electromagnetic generator (not depicted).

Once the first body 2 approaches the last downstroke section (see Fig. 3), in the lower portion of the container 1, the second body 7 displaces the fluid 10 that filled the cavity 21 of the first body 2 up until that point, as if they were a plunger and cylinder. The upper cover 22 is still open and the fluid 10 leaks into the container through the space between the upper cover 22 and the frame of the first body 2.

In Fig. 7, the first body 2 is in the lower end position, in which the entire cavity 21 is occupied by the second body 7 and in which the upper cover 22 has been pushed upwards by the contact with the closed cover 71, whereby the cavity 21 is sealed in the upper portion by the upper cover 22 (in the closed operating position).

Since the flywheel 4 is permanently in motion due to the intrinsic inertia it involves and has a generated momentum when it reaches the lower portion of the container 11 (Fig. 7), the lower end position described above, the actual inertia forces the first body 2 to start to rise (seconds after the moment depicted in Fig. 7), as it is driven upwards by the connecting rod 5. At this point a certain suction is created between the closed upper cover 22 and the cover 72, which is made use of to synchronize the extension of the rods 76 and so that the cover 72 goes to the open operating position. This situation is depicted in Fig. 19 in which the air or gas from inside the second body 7 is occupying the cavity 21 as the first body 2 rises aided by the connecting rod 5.

In Fig. 9, the cavity 21 is virtually occupied by the air or gas supplied by the second body 7, and the first body 2 itself rises by the upward vertical thrust due to the weight of the volume of fluid 11 that it displaces within the container 1. In this situation, it is the first body 2 itself that transmits rotation to the flywheel 4 by means of the connecting rod 5, which rotation is transferred to the primary shaft 41 for exploitation.

Therefore, once the cavity 21 is filled with air or with gas, the cover 72 will return to its closed operating position and the first body will rise (Fig. 10) until reaching the upper end position.

When the first mobile body 2 reaches the end of its upstroke, reaching the upper end position, the upper cover 22 continues to be closed. Then the opening actuating means 6 for opening the upper cover 22 are actuated as explained below in reference to the position depicted in Fig. 20.

The device 100 comprises at the upper end 12 of the container 1 the opening actuating means 6 which act on the upper cover 22 when the first body 2 has reached the upper end position at the end of its upstroke. Said opening actuating means 6 cause the movement of the upper cover 22 for it to go from the closed operating position to the open operating position, the release of the air or gas contained in the cavity 21 and the filling of the cavity 21 with the fluid 10 in which the first body 2 is immersed taking place with the opening, such that the opening actuating means 6 act at the same time as air or gas exhaust means and as filling means for filling the cavity 21 with fluid 10.

In the depicted example, the opening actuating means 6 comprise two actuating cylinders the rods of which are arranged such that they are aligned with corresponding fitting rods 26 of the upper cover 22 and the extension of which causes the thrust with the downward movement of the upper ends 27 of the corresponding fitting rods 26 which initially projected vertically from the upper end 24 of the frame of the first body 2, as observed in Fig. 10, once the first body 2 has reached the upper end position at the end of its upstroke.

With the upper cover 22 again in the open operating position and the cavity 21 filled with fluid 10, the device is again in the conditions of Fig. 5, ready to start its downstroke and a new cycle.

## Claims

1. A power generating device (100) based on gravitational energy, comprising
- a container (1) provided with a fluid (10) therein, a support bottom (11) of the container and an upper end (12) opposite the bottom being distinguished,
- a first mobile body (2) housed inside the container, able to move vertically in a guided manner from an upper end position to a lower end position due to its own weight and towards the bottom of the container, and from a lower end position to an upper end position in the direction opposite the bottom of the container, a downstroke and an upstroke taking place alternatively,
- guide means (3) for the guided vertical movement of the first mobile body inside the container,
**characterized in that** the device comprises
- a flywheel (4) arranged outside the container and above its upper end, oriented according to a plane perpendicular to the bottom of the container and coupled to the first mobile body through transmission means converting the vertical motion of the first mobile body into a rotary motion of the flywheel about its axial shaft, and converting the rotary motion of the flywheel into a vertical motion of the first mobile body, a primary rotating shaft (41) being coupled to the flywheel and integrally rotating with the same,
- and **in that** the first mobile body is provided with a cavity (21) able to be occupied by the fluid arranged inside the container and drained of same by the action of filling means and of displacement means provided in the device for filling/displacing the fluid, and able to be occupied by air or gas by the action of air or gas supply means and drained by the action of air or gas exhaust means provided in the device,
all this being configured such that since the cavity (21) is occupied by the fluid (10) of the container, the first body (2) drops due to its own weight towards the bottom of the container, causing the rotation of the flywheel (4) and of the primary shaft (41), and when the fluid (10) is displaced from the cavity (21) and replaced with air or gas, the first body (2) rises in the direction opposite the bottom of the container due to the force of the weight of the volume of fluid that it displaces contributing to the rotation of the primary shaft (41) in the same direction as during the drop of the first body (1), the generated rotational energy of the primary shaft (41) being susceptible to exploitation.

2. The power generating device (100) according to claim 1, **characterized in that** the transmission means converting the vertical dropping and rising motion of the first mobile body (2) into a rotary motion of the flywheel (4) about its axial shaft, and vice versa, comprise a connecting rod (5) with a first end coupled to the upper portion of the first body (2) and with a second end attached in an articulated manner to an appendage (42) that the flywheel (4) is provided with along a portion of its perimeter, the flywheel (4) and the connecting rod (5) forming a connecting rod-crank mechanism.

3. The power generating device (100) according to claim 2, **characterized in that** the first mobile body (2) is a tubular body open towards the bottom (11) of the container (1) and comprising a frame provided with a side enclosure wall (23) and with an upper cover (22) arranged at the upper end (24) of the frame, the cavity (21) corresponding to the inner space open in the lower portion comprised between the side enclosure (23) and the upper cover (22)

4. The power generating device (100) according to claim 3, **characterized in that** the upper cover (22) of the first body (2) is vertically movable with respect to the upper end (24) of the frame, the upper cover (22) being able to adopt an open operating position in which there is a gap between the upper cover (22) and the upper end (24) of the frame and between the contour (28) of the upper cover (22) and the side enclosure wall (23), said gap forming an upper communication opening for communicating the cavity (21) with the outside of the first body (2) and with the fluid (10) surrounding it in the container (1); and to adopt a closed operating position, in which the upper cover (22) is arranged at the upper end (24) of the frame keeping the cavity (21) of the first body (2) sealed in the upper portion.

5. The power generating device (100) according to claim 4, **characterized in that** in the open operating position, the upper cover (22) of the first body (2) is located below the upper end (24) of the frame of the first body (2).

6. The power generating device (100) according to claim 5, **characterized in that** the upper cover (22) is slidably coupled to the upper end (24) of the frame by means of at least one vertical fitting rod (26) arranged perpendicular to the upper cover (22) and provided with a free upper end (27) and with a lower end attached to the upper cover (22), each fitting rod (26) being able to slide with respect to the upper end (24) of the frame when pushed vertically at one of its ends and to adopt at least two stable fit positions in the frame corresponding to the closed and open operating positions of the upper cover (22).

7. The power generating device (100) according to claim 6, **characterized in that** the upper end (27) of each fitting rod (26) projects vertically from the upper end (24) of the frame in the closed operating position of the upper cover (22).

8. The power generating device (100) according to any one of claims 4 to 7, **characterized in that** the displacement means for displacing the fluid (10) from the cavity (21) of the first mobile body (2) comprise a second body (7) housed inside the container (1) and fixedly arranged at the bottom (11) of same, configured such that the outer volume of the second body (7) is complementary to the volume of the cavity (21) of the first body, the second body (7) being arranged vertically aligned with the first body (2) such that during a first downstroke section of the first body (2), the upper cover (22) is in the open operating position and the cavity (21) is occupied by the fluid (10) inside the container (1) and in a last downstroke section, the fluid (10) is gradually displaced from the cavity (21) by the gradual introduction of the second body (7) in the cavity (21) until reaching a lower end position in which the upper cover (22) is in the closed operating position and in which the entire cavity (21) is occupied by said second body (7).

9. The power generating device (100) according to claim 8, **characterized in that** the second body (7) is a tubular body containing air or gas therein, comprising a frame provided with a side enclosure wall (73) and finished in the lower portion with a base (71) arranged such that it is supported on the bottom (11) of the container (1) and finished in the upper portion with a cover (72) that can move vertically upwards, the cover (72) being able to adopt an open operating position in which a gap is created between the cover (72) and the upper end (74) of the frame through which the air or gas from inside is released upwards, and a closed operating position in which the cover (72) is arranged at the upper end (74) of the frame keeping the upward air or gas passage closed, the cover (72) forming the air or gas supply means for supplying air or gas to the cavity (21) of the first body (2) when the cover (72) is in the open operating position.

10. The power generating device (100) according to claims 5 and 9, **characterized in that** in the last downstroke section of the first body (2), the upper cover (22) of the first body (2) is gradually moved upwards, going from its open operating position to its closed operating position by the contact of said upper cover (22) with the cover (72) of the second body (7) and the thrust received from the latter cover as the first body (2) drops to the lower end position.

11. The power generating device (100) according to claim 9 or 10, **characterized in that** the cover (72) of the second body (7) adopts the open operating position once the first body (2) has reached the lower end position and maintains it at least until the cavity (21) of the first body (2) is occupied by air or gas.

12. The power generating device (100) according to any one of claims 9 to 11, **characterized in that** the upper end (74) of the frame of the second body (7) is provided with at least raising and lowering means comprising a cylinder (77), a plunger and a rod (76) able to extend beyond the cylinder (77) or to be retracted therein, in which the cylinder (77) is fixedly arranged inside the frame with the rod (76) oriented perpendicular to the cover (72) and its end attached to said cover (72), such that the extension and the retraction of the rod (76) make the cover (72) go from the closed operating position to the open operating position and from the open operating position to the closed operating position, respectively.

13. The power generating device (100) according to any one of claims 4 to 12, **characterized in that** the device (100) comprises at the upper end (12) of the container (1) opening actuating means (6) for opening the upper cover (22) of the first body (2) which act on the upper cover (22) when the first body (2) has reached the upper end position at the end of its upstroke, said opening actuating means (6) causing the movement of the upper cover (22) for it to go from the closed operating position to the open operating position, the release of the air or gas contained in the cavity (21) and the filling of the cavity (21) with the fluid (10) in which the first body (2) is immersed taking place with the opening, such that the opening actuating means (6) act at the same time as air or gas exhaust means and as filling means for filling the cavity (21) with fluid (10).

14. The power generating device (100) according to claims 7 and 13, **characterized in that** the opening actuating means (6) of the upper cover (22) of the first body (2) comprise at least one actuating cylinder the rod of which is arranged such that it is aligned with a corresponding fitting rod (26) of the upper cover (22) and the extension of which causes the thrust with the downward movement of the upper end (27) of the corresponding fitting rod (26) which initially projects vertically from the upper end (24) of the frame of the first body (2) once the first body (2) has reached the upper end position at the end of its upstroke.

15. A power generating method, **characterized in that** it comprises having a power generating device (100) defined in claim 8 and performing the following steps to start and maintain the rotation of the primary shaft (41) integral with the rotation of the flywheel (4):
a) starting a first downstroke of the first mobile body (2) with its upper cover (22) in the open operating position, allowing it to fall due to its own weight and with the cavity (21) filled with the fluid (10) that the container (1) is filled with, thereby causing the start of the rotation of the flywheel (4) and the start of the rotation of the primary shaft (41),
b) the upper cover (22) adopting the closed operating position when the first body (2) has reached the lower end position at the end of the downstroke, in which the cavity (21) of the first body (2) is completely occupied by the second body (7) and lacking fluid (10),
c) waiting until the actual rotation of the flywheel (4) pulls the first body upwards thereby starting an upstroke,
d) supplying air or gas to the cavity (21) until filling the entire volume of the cavity (21) with it, thereby causing the continuation of the rise of the first body (2) due to the thrust of the force equal to the weight of the volume that the first body (2) displaces in the fluid (10) of the container with its cavity (21) filled with air or gas, and thereby the continuation of the rotation of the flywheel (4) and of the primary shaft (41),
e) when the first body (2) reaches the upper end position in its upstroke, the upper cover (22) going from the closed operating position to the open operating position, whereby the cavity (21) is drained of air or gas and subsequently filled again with the fluid (10),
f) again starting a successive downstroke of the first body (2) aided at first by the rotation of the flywheel (4) and subsequently by the weight of the first body (2) and of its cavity (21) filled with fluid (10) which contributes to the continuation of the rotation of the flywheel (4) and to the continuation of the rotation of the primary shaft (41), and
g) repeating steps b) to f) up to the time desired for keeping the primary shaft (41) rotating.
